(19) Europäisches Patentamt / European Patent Office / Office européen des brevets

(11) **EP 4 387 283 A1**

(12) **EUROPEAN PATENT APPLICATION**
published in accordance with Art. 153(4) EPC

(43) Date of publication:
**19.06.2024 Bulletin 2024/25**

(21) Application number: **22855532.2**

(22) Date of filing: **12.08.2022**

(51) International Patent Classification (IPC):
*H04W 4/06* (2009.01)

(52) Cooperative Patent Classification (CPC):
**H04W 4/06; H04W 68/02; H04W 76/28**

(86) International application number:
**PCT/CN2022/112117**

(87) International publication number:
**WO 2023/016552 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2021 CN 202110930512**

(71) Applicants:
• **CHINA MOBILE COMMUNICATION CO., LTD.
RESEARCH INSTITUTE
Beijing 100053 (CN)**

• **CHINA MOBILE COMMUNICATIONS GROUP CO.,
LTD.
Beijing 100032 (CN)**

(72) Inventors:
• **LIU, Xiaoman
Beijing 100032 (CN)**
• **CHAI, Li
Beijing 100032 (CN)**

(74) Representative: **Maiwald GmbH
Elisenhof
Elisenstraße 3
80335 München (DE)**

(54) **PAGING MESSAGE SENDING METHOD, PAGING MESSAGE RECEIVING METHOD, AND DEVICE AND STORAGE MEDIUM**

(57) Disclosed in the present application are a paging message sending method, a paging message receiving method, and a device and a storage medium. The paging message sending method comprises: when an MBS service is about to start, an AMF sending, in a paging area, a paging message to each base station according to a support condition of each base station in the paging area for a multicast and broadcast characteristic.

receiving, by a base station, a paging message from an AMF — 201

after reading, by the base station, information in the paging message, paging a UE, by the base station, according to a situation for supporting multicast and broadcast features at the base station — 202

FIG. 2

**Description**

CROSS-REFERENCE TO RELATED APPLICATION

This disclosure claims a priority to Chinese Patent Application No. 202110930512.8, filed on August 13, 2021 in China National Intellectual Property Administration, the entire content of which is incorporated herein by reference.

TECHNICAL FIELD

The disclosure relates to the field of communication technologies, and particularly, to a method for transmitting a paging message, a method for receiving a paging message, a device, and a storage medium.

BACKGROUND

If a user equipment (UE) supporting a multicast service enters an idle state after joining into a multicast and broadcast service (MBS) session group through a join procedure and before the service is about to start, a network may page the UE according to stored information and inform the UE that there is a session start, so that the UE reenters a connected state to receive the service. For a node supporting multicast, the UE is paged via a group paging manner, and for a node not supporting multicast, the UE is paged via a normal unicast paging manner.

The deficiency in the related art may be that there is no solution to select a suitable manner to page the UE to inform the UE that an MBS session is about to start.

SUMMARY

A method for transmitting a paging message, a method for receiving a paging message, a device, and a storage medium, are provided according to the disclosure, to solve the problem that there is no solution to select the suitable manner to page the UE to inform the UE that the MBS session is about to start.

The following technical solutions are provided according to the disclosure.

A method for transmitting a paging message includes:

when an MBS session is about to start, transmitting, by an access and mobility management function (AMF), a paging message to respective base stations in a paging area, according to respective situations for supporting multicast and broadcast features at the base stations in the paging area.

According to an implementation, the AMF determines whether the base station supports the multicast and broadcast features when establishing a next generation (NG) interface between the base station and the AMF.

According to an implementation, the AMF determines the paging area in any one or a combination of:

determining, by the AMF, a group paging area and a unicast paging area according to a tracking area (TA) list and multicast service group member information; or
determining, by the AMF, a group paging area and a unicast paging area according to a TA configuration mode.

According to an implementation, the TA configuration mode includes any one of:

all base stations in a TA, supporting the MBS session, or all base stations in a TA, not supporting the MBS session; or
a base station supporting the MBS session and a base station not supporting the MBS session being in a same TA.

According to an implementation, the paging message is transmitted from the base station to a UE via a unicast paging message or a multicast-dedicated group paging message.

According to an implementation, transmitting the paging message to the respective base stations according to the respective situations for supporting the multicast and broadcast features at the base stations in the paging area includes under a case that there is a base station supporting the multicast and broadcast features in the paging area,

transmitting a set of group paging messages including MBS session information that a session start is about to occur, and a set of paging messages including UE identity (UE ID) information; or
transmitting a set of paging messages including MBS session information that a session start is about to occur and UE ID information corresponding to the MBS session; or
transmitting a group paging message including MBS session information that a session start is about to occur.

According to an implementation, the MBS session information includes any one or a combination of:

an MBS session ID, a temporary mobile group identity (TMGI), or a multicast IP address.

A method for transmitting a paging message includes:

receiving, by a base station, a paging message from an AMF; and
after reading, by the base station, information in the paging message, paging, by the base station, a UE according to a situation for supporting multicast and broadcast features at the base station.

According to an implementation, reading by the base station the information in the paging message according to the situation for supporting the multicast and broadcast features at the base station includes:

in response to receiving a set of group paging messages including MBS session information that a session start is about to occur, and a set of paging messages including UE ID information,
selecting, by the base station supporting the multicast and broadcast features, the group paging message, and transmitting the paging message comprising the MBS session information at all paging occasions (POs), or selecting, by the base station not supporting the multicast and broadcast features, the paging message, and transmitting the paging message only comprising the UE ID information at a PO corresponding to the UE ID;
or
in response to receiving a set of paging messages including MBS session information that a session start is about to occur and UE ID information corresponding to the MBS session,
transmitting, by the base station supporting the multicast and broadcast features, the paging message comprising the MBS session information or comprising the MBS session information and carrying the UE ID information, at a PO corresponding to the UE ID information, according to the UE ID information; or
transmitting, by the base station not supporting the multicast and broadcast features, the paging message only comprising the UE ID information at a PO corresponding to the UE ID information, according to the UE ID information;
or
in response to receiving a group paging message including MBS session information that a session start is about to occur,
transmitting, by the base station supporting the multicast and broadcast features, the paging message comprising the MBS session information at all POs, or according to group member information obtained from a core network, transmitting the paging message comprising the MBS session information or comprising the MBS session information and carrying the UE ID information at a PO corresponding to a member only; or
after the base station not supporting the multicast and broadcast features requests corresponding UE ID information from the AMF, transmitting the paging message comprising a UE identity (UE_ID) at a PO corresponding to the UE ID only.

According to an implementation, the method further includes:
configuring by the base station an MBS-dedicated discontinuous reception (DRX) cycle via a system message.
According to an implementation, the paging message is transmitted from the base station to the UE via a unicast paging message or a multicast-dedicated group paging message.
According to an implementation, the PO at which the transmits the group paging message includes:

in response to transmitting via the unicast paging message, the PO being a PO obtained according to a UE ID; or
in response to transmitting via the MBS-dedicated group paging message, the PO being a PO obtained according to MBS session information.

According to an implementation, the method further includes:
for the group paging message transmitted via the unicast paging message, indicating whether to include MBS session group paging information or whether to include a type of MBS session group paging information via a short message.
According to an implementation, the method further includes:

configuring, by the base station, a fixed radio frame and subframe position for receiving the group paging message, in the MBS-dedicated DRX cycle, via a system message; or
for multicast services configured with a same set of MBS-dedicated DRX cycle configurations, dispersing, by the base station, a time domain position at which an MBS session subscriber or interested user group needs to monitor paging, to different POs or paging frames (PFs), according to service identity information of the MBS session.

According to an implementation, the method further includes:

scrambling the group paging message via a group-radio network temporary identity (G-RNTI) or a group paging-radio network temporary identity (GP-RNTI); or

scrambling the group paging message and a unicast paging message via a paging-radio network temporary identity (P-RNTI).

According to an implementation, when scrambling the group paging message and the unicast paging message via the P-RNTI, the method further includes:

configuring a receiving offset of a group-paging occasion (G-PO) or a unicast PO; or

adding the group paging message in the unicast paging message.

According to an implementation, when configuring the receiving offset of the G-PO or the unicast PO, configuring by any one or a combination of:
a system message or a radio resource control (RRC) dedicated signaling.

A method for receiving a paging message includes:

receiving, by a UE, a paging message from a base station; and

after reading, by the UE, information in the paging message according to a situation for supporting multicast and broadcast features, receiving, by the UE, an MBS session.

According to an implementation, the method further includes:
receiving, by the UE, a radio network temporary identity (RNTI) for an MBS session group paging message, allocated by a base station in a registration or join procedure.

According to an implementation, the method further includes:
when the UE is released to a non-connected state after joining, retaining any one or a combination of MBS session context: a mapping relationship between different MBS sessions and G-RNTIs, or a GP-RNTI.

According to an implementation, the method further includes:
when the UE supports the MBS session, after receiving the paging message at a PO corresponding to the MBS session, reading a UE ID list and MBS session information.

According to an implementation, the method further includes:
determining whether the paging message includes MBS session group paging information or only is a paging message according to an indication of a short message.

According to an implementation, the method further includes:

descrambling a group paging message via a G-RNTI or a GP-RNTI; or,

descrambling a group paging message and a unicast paging message via a P-RNTI.

According to an implementation, when descrambling the group paging message and the unicast paging message via the P-RNTI, the method further includes:

receiving a receiving offset of a G-PO or a unicast PO, configured by the base station;

receiving the unicast paging message added with the group paging message; or

receiving a UE energy saving mode configured by the base station.

According to an implementation, receives the receiving offset of the G-PO or the unicast PO configured by the base station, by any one or a combination of:
a system message or an RRC dedicated signaling.

According to an implementation, when receiving the unicast paging message added with the group paging message, the method further includes:

when the UE supports the MBS session, reading an information element (IE) including an MBS session identity to confirm whether there is an MBS session that the UE is interested in/subscribes to, and reading and checking an IE including UE ID information in the paging message; or

when the UE does not support the MBS session, reading and checking an IE including UE ID information in the message to confirm whether to receive a paging message from a network.

According to an implementation, when receiving the UE energy saving mode configured by the base station, the method further includes:

when not receiving a message whether the base station itself supports the MBS session from the base station, receiving a unicast paging only when the UE wakes up at a PO or a PF of the unicast paging.

According to an implementation, the method further includes:

receiving a fixed radio frame and subframe position for receiving a multicast-dedicated group paging message in an MBS-dedicated DRX cycle, configured by the base station via a system message; or

receiving a same set of MBS-dedicated DRX cycle configurations configured by the base station for a plurality of multicast services, and monitoring a group paging message when the UE wakes up at a PO or a PF corresponding to an MBS session the UE subscribes to, to confirm whether the MBS session is about to start.

An AMF includes:

a processor, configured to read a program stored in a memory, to perform operations of:

when an MBS session is about to start, transmitting a paging message to respective base stations in a paging area, according to respective situations for supporting multicast and broadcast features at the base stations in the paging area; and,

a transceiver, configured to receive and transmit data under a control of the processor.

According to an implementation, the AMF determines whether the base station supports the multicast and broadcast features when establishing an NG interface between the base station and the AMF.

According to an implementation, the paging area is determined in any one or a combination of:

determining a paging area according to a TA list and multicast service group member information; or

determining a unicast paging area according to a TA configuration mode.

According to an implementation, the TA configuration mode includes any one of:

all base stations in a TA, supporting the MBS session, or all base stations in a TA, not supporting the MBS session; or

a base station supporting the MBS session and a base station not supporting the MBS session being in a same TA.

According to an implementation, the paging message is transmitted from the base station to the UE via a unicast paging message or a multicast-dedicated group paging message.

According to an implementation, transmitting the paging message to the respective base stations in the paging area according to the respective situations for supporting the multicast and broadcast features at the base stations in the paging area includes under a case that there is a base station supporting the multicast and broadcast features in the paging area,

transmitting a set of group paging messages including MBS session information that a session start is about to occur, and a set of paging messages including UE ID information; or

transmitting a set of paging messages including MBS session information that a session start is about to occur, and UE ID information corresponding to the MBS session; or

transmitting a group paging message including MBS session information that a session start is about to occur.

According to an implementation, the MBS session information includes any one or a combination of:

an MBS session ID, a TMGI, or a multicast IP address.

An AMF includes:

an AMF paging module, configured to, when an MBS session is about to start, transmit a paging message to respective base stations in a paging area, according to situations for supporting multicast and broadcast features at the base stations in the paging area.

According to an implementation, the AMF determining module is further configured to determine whether the base station supports the multicast and broadcast features when establishing a NG interface between the base station and the AMF.

According to an implementation, the AMF paging module is further configured to determine the paging area in any one or a combination of:

determining, by the AMF, a group paging area and a unicast paging area according to a TA list and multicast service group member information; or

determining, by the AMF, a group paging area and a unicast paging area according to a TA configuration mode.

According to an implementation, the AMF paging module is further configured to, based on the TA configuration mode, include any one of:

all base stations in a TA, supporting the MBS session, or all base stations in a TA, not supporting the MBS session; or
a base station supporting the MBS session and a base station not supporting the MBS session being in a same TA.

According to an implementation, the AMF paging module is further configured to transmit the paging message from the base station to the UE via a unicast paging message or a multicast-dedicated group paging message.

According to an implementation, the AMF paging module is further configured to transmit the paging message to the respective base stations in the paging area according to the respective situations for supporting the multicast and broadcast features at the base stations in the paging area, including under a case that there is a base station supporting the multicast and broadcast features in the paging area,

transmitting a set of group paging messages including MBS session information that a session start is about to occur, and a set of paging messages including UE ID information; or
transmitting a set of paging messages including MBS session information that a session start is about to occur, and UE ID information corresponding to the MBS session; or
transmitting a group paging message including MBS session information that a session start is about to occur.

According to an implementation, the AMF paging module is further configured to transmit MBS session information including any one or a combination of:
an MBS session ID, a TMGI, or a multicast IP address.

A base station includes:
a processor, configured to read a program stored in a memory, to perform operations of:

receiving a paging message from an AMF; and
after reading information in the paging message, paging a UE according to a situation for supporting multicast and broadcast features at the base station; and
a transceiver, configured to receive and transmit data under a control of the processor.

According to an implementation, reading the information in the paging message according to the situation for supporting the multicast and broadcast features at the base station includes:

in response to receiving a set of group paging messages including MBS session information that a session start is about to occur, and a set of paging messages including UE ID information,
selecting, by the base station supporting the multicast and broadcast features, the group paging message, and transmitting the paging message including the MBS session information at all POs, or selecting, by the base station not supporting the multicast and broadcast features, the paging message, and transmitting the paging message only including the UE ID information at a PO corresponding to the UE ID;
or
in response to receiving a set of paging messages including MBS session information that a session start is about to occur and UE ID information corresponding to the MBS session,
transmitting, by the base station supporting the multicast and broadcast features, the paging message including the MBS session information or including the MBS session information and carrying the UE ID information, at a PO corresponding to the UE ID information, according to the UE ID information; or
transmitting, by the base station not supporting the multicast and broadcast features, the paging message only including the UE ID information at a PO corresponding to the UE ID information, according to the UE ID information; or
in response to receiving a group paging message including MBS session information that a session start is about to occur,
transmitting, by the base station supporting the multicast and broadcast features, the paging message including the MBS session information at all POs, or according to group member information obtained from a core network, transmitting the paging message including the MBS session information or including the MBS session information and carrying the UE ID information at a PO corresponding to a member only; or
after the base station not supporting the multicast and broadcast features requests corresponding UE ID information from the AMF, transmitting the paging message including a UE identity (UE_ID) at a PO corresponding to the UE ID only.

According to an implementation, the base station further:
configures an MBS-dedicated DRX cycle via a system message.

According to an implementation, the paging message is transmitted from the base station to the UE via a unicast paging message or a multicast-dedicated group paging message.

According to an implementation, the PO at which the transmits the group paging message includes:

in response to transmitting via the unicast paging message, the PO being a PO obtained according to a UE ID; or
in response to transmitting via the MBS-dedicated group paging message, the PO being a PO obtained according to MBS session information.

According to an implementation, the base station further:
for the group paging message transmitted via the unicast paging message, indicates whether to include MBS session group paging information or whether to include a type of MBS session group paging information via a short message.

According to an implementation, the base station further:

configures a fixed radio frame and subframe position for receiving the group paging message in the MBS-dedicated DRX cycle via a system message; or
for multicast services configured with a same set of MBS-dedicated DRX cycle configurations, disperses a time domain position at which an MBS session subscriber or interested user group needs to monitor paging, to different POs or PFs, according to service identity information of the MBS session.

According to an implementation, the base station further:

scrambles the group paging message via a G-RNTI or a GP-RNTI; or
scrambles the group paging message and a unicast paging message via a P-RNTI.

According to an implementation, when scrambling the group paging message and the unicast paging message via the P-RNTI, the base station further:

configures a receiving offset of a G-PO or a unicast PO;
adds the group paging message in the unicast paging message; or
configures a UE energy saving mode.

According to an implementation, when configuring the receiving offset of the G-PO or the unicast PO, configures by any one or a combination of:
a system message or an RRC dedicated signaling.

A base station includes:

a base station receiving module, configured to receive a paging message from an AMF; and
a base station paging module, configured to, after reading information in the paging message, page a UE according to a situation for supporting multicast and broadcast features at the base station.

According to an implementation, the base station paging module is further configured to read the information in the paging message according to the situation for supporting the multicast and broadcast features at the base station, by performing:

in response to receiving a set of group paging messages including MBS session information that a session start is about to occur, and a set of paging messages including UE ID information,
selecting, by the base station supporting the multicast and broadcast features, the group paging message, and transmitting the paging message including the MBS session information at all POs, or selecting, by the base station not supporting the multicast and broadcast features, the paging message, and transmitting the paging message only including the UE ID information at a PO corresponding to the UE ID;
or
in response to receiving a set of paging messages including MBS session information that a session start is about to occur and UE ID information corresponding to the MBS session,
transmitting, by the base station supporting the multicast and broadcast features, the paging message including the MBS session information or including the MBS session information and carrying the UE ID information, at a PO corresponding to the UE ID information, according to the UE ID information; or

transmitting, by the base station not supporting the multicast and broadcast features, the paging message only including the UE ID information at a PO corresponding to the UE ID information, according to the UE ID information; or

in response to receiving a group paging message including MBS session information that a session start is about to occur,

transmitting, by the base station supporting the multicast and broadcast features, the paging message including the MBS session information at all POs, or according to group member information obtained from a core network, transmitting the paging message including the MBS session information or including the MBS session information and carrying the UE ID information at a PO corresponding to a member only; or

after the base station not supporting the multicast and broadcast features requests corresponding UE ID information from the AMF, transmitting the paging message including a UE identity (UE_ID) at a PO corresponding to the UE ID only.

According to an implementation, the base station paging module is further configured to configure an MBS-dedicated DRX cycle via a system message.

According to an implementation, the base station paging module is further configured to transmit the paging message from the base station to the UE via a unicast paging message or a multicast-dedicated group paging message.

According to an implementation, the base station paging module is further configured to transmit the paging message at the PO, in which in response to transmitting via the unicast paging message, the PO is a PO obtained according to a UE ID; or in response to transmitting via the MBS-dedicated group paging message, the PO is a PO obtained according to MBS session information.

According to an implementation, the base station paging module is further configured to, for the group paging message transmitted via the unicast paging message, indicate whether to include MBS session group paging information or to include a type of MBS session group paging information via a short message.

According to an implementation, the base station paging module is further configured to, configure a fixed radio frame and subframe position for receiving the group paging message, in the MBS-dedicated DRX cycle via a system message; or for multicast services configured with a same set of MBS-dedicated DRX cycle configurations, disperse a time domain position at which an MBS session subscriber or interested user group needs to monitor paging, to different POs or PFs, according to service identity information of the MBS session.

According to an implementation, the base station paging module is further configured to, scramble the group paging message via a G-RNTI or a GP-RNTI; or scramble the group paging message and a unicast paging message via a P-RNTI.

According to an implementation, the base station paging module is further configured to, when scrambling the group paging message and the unicast paging message via the P-RNTI, configure a receiving offset of a G-PO or a unicast PO; add the group paging message in the unicast paging message; or configure a UE energy saving mode.

According to an implementation, the base station paging module is further configured to, when configuring the receiving offset of the G-PO or the unicast PO, configure by any one or a combination of:

a system message or an RRC dedicated signaling.

A UE includes:

a processor, configured to read a program stored in a memory, to perform operations of:

receiving a paging message from a base station; and
after reading information in the paging message according to a situation for supporting multicast and broadcast features at the UE, receiving an MBS session; and
a transceiver, configured to receive and transmit data under a control of the processor.

According to an implementation, the UE further:
receives an RNTI for an MBS session group paging message, allocated by a base station in a registration or join procedure.

According to an implementation, the UE further:
when the UE is released to a non-connected state after joining, retains any one or a combination of MBS session context:
a mapping relationship between different MBS sessions and G-RNTIs, or a GP-RNTI.

According to an implementation, the UE further:
when the UE supports the MBS session, after receiving the paging message at a PO corresponding to the MBS session, reads a UE ID list and MBS session information.

According to an implementation, the UE further:
determines whether the paging message includes MBS session group paging information or only is a paging message according to an indication of a short message.

According to an implementation, the UE further:

descrambles a group paging message via a G-RNTI or a GP-RNTI; or
descrambles a group paging message and a unicast paging message via a P-RNTI.

According to an implementation, when descrambling the group paging message and the unicast paging message via the P-RNTI, the UE further:

receives a receiving offset of a G-PO or a unicast PO, configured by the base station;
receives the unicast paging message added with the group paging message; or
receives a UE energy saving mode configured by the base station.

According to an implementation, receives the receiving offset of the G-PO or the PO configured by the base station, by any one or a combination of:
a system message or an RRC dedicated signaling.

According to an implementation, when receiving the unicast paging message adding the group paging message, the UE further:

when the UE supports the MBS session, reads an IE including an MBS session identity to confirm whether there is an MBS session that the UE is interested in/subscribes to, and reads and checks an IE including UE ID information in the paging message; or
when the UE does not support the MBS session, reads and checks an IE including UE ID information in the message to confirm whether to receive a paging message from a network.

According to an implementation, when receiving the UE energy saving mode configured by the base station, the UE further:
when not receiving a message whether the base station itself supports the MBS session from the base station, receives a unicast paging only when waking up at a PO or a PF of the unicast paging.

According to an implementation, the UE further:

receives a fixed radio frame and subframe position for receiving a multicast-dedicated group paging message in an MBS-dedicated DRX cycle, configured by the base station via a system message; or,
receives a same set of MBS-dedicated DRX cycle configurations configured by the base station for a plurality of multicast services, and monitoring a group paging message when the UE wakes up at a PO or a PF corresponding to an MBS session the UE subscribes to, to confirm whether the MBS session is about to start.

A UE includes:

a UE paging module, configured to receive a paging message from a base station; and
a UE receiving module, configured to, after reading information in the paging message according to a situation for supporting multicast and broadcast features, receive an MBS session.

According to an implementation, the UE receiving module is further configured to, receive an RNTI for an MBS session group paging message, allocated by a base station in a registration or join procedure.

According to an implementation, the UE receiving module is further configured to, when the UE is released to a non-connected state after joining, retain any one or a combination of MBS session context: a mapping relationship between different MBS sessions and G-RNTIs, or a GP-RNTI.

According to an implementation, the UE receiving module is further configured to, when the UE supports the MBS session, after receiving the paging message at a PO corresponding to the MBS session, read a UE ID list and MBS session information.

According to an implementation, the UE receiving module is further configured to determine whether the paging message includes MBS session group paging information or only is a paging message according to an indication of a short message.

According to an implementation, the UE receiving module is further configured to, descramble a group paging message via a G-RNTI or a GP-RNTI; or descramble a group paging message and a unicast paging message via a P-RNTI.

According to an implementation, the UE receiving module is further configured to, when descrambling the group paging message and the unicast paging message via the P-RNTI, receive a receiving offset of a G-PO or a unicast PO, configured by the base station; receive the unicast paging message added with the group paging message; or receive a UE energy saving mode configured by the base station.

According to an implementation, the UE receiving module is further configured to, receive the receiving offset of the G-PO or the unicast PO configured by the base station, by any one or a combination of:
a system message or an RRC dedicated signaling.

According to an implementation, the UE receiving module is further configured to, when receiving the unicast PO added with the group paging message, when the UE supports the MBS session, read an IE including an MBS session identity to confirm whether there is an MBS session that the UE is interested in/subscribes to, and read and check an IE including UE ID information in the paging message; or when the UE does not support the MBS session, read and check an IE including UE ID information in the message to confirm whether to receive a paging message from a network.

According to an implementation, the UE receiving module is further configured to, when receiving the UE energy saving mode configured by the base station, and when not receiving a message whether the base station itself supports the MBS session from the base station, receive a unicast paging only when the UE wakes up at a PO or a PF of the unicast paging.

According to an implementation, the UE receiving module is further configured to receive a fixed radio frame and subframe position for receiving a multicast-dedicated group paging message in an MBS-dedicated DRX cycle, configured by the base station via a system message; or
receive a same set of MBS-dedicated DRX cycle configurations configured by the base station for a plurality of multicast services, and listen to a group paging message when the UE wakes up at a PO or a PF corresponding to an MBS session the UE subscribes to, to confirm whether the MBS session is about to start.

A computer-readable storage medium is provided. The computer-readable storage medium stores a computer program for implementing the method for transmitting the paging message at the side of the AMF, the method for transmitting the paging message at the side of the base station, or the method for receiving the paging message at the side of the UE.

The disclosure has following beneficial effects.

In the technical solutions according to embodiments of the disclosure, when the MBS session is about to start, the AMF may transmit the paging message to the respective base stations in the paging area, according to the situations for supporting multicast and broadcast features at the base stations in the paging area; the base station, after reading information in the paging message, may page the UE according to a situation for supporting multicast and broadcast features at the base station; and after the UE reads information in the paging message according to the situation for supporting multicast and broadcast features at the UE, the UE may receive the MBS session. Since paging is performed in combination with the situation for supporting the multicast and broadcast features, it may be ensured to select a suitable manner to page the UE to inform the UE that the MBS session is about to start.

Further, the AMF issues the paging message to the base station and determines the group paging area and calculates the PO or the PF under the group paging, so that a suitable manner is selected to page the UE at different base stations to inform that the MBS session is about to start.

Further, the paging message is received in combination with the situations for supporting the multicast and broadcast features, which reduces an impact on the UE, and achieves the technical effect of reducing an extra power consumption for the UE caused due to the group paging and of saving energy.

## BRIEF DESCRIPTION OF THE DRAWINGS

Accompanying drawings described herein are used to provide a further understanding on the disclosure and constitute a part of this specification. Embodiments and descriptions of embodiments according to the disclosure are used to explain the disclosure and may not constitute a limitation of the disclosure. In the accompanying drawings:

FIG. 1 is a flowchart illustrating an implementation of a method for transmitting a paging message at a side of an AMF according to embodiments of the disclosure;
FIG. 2 is a flowchart illustrating an implementation of a method for transmitting a paging message at a side of a base station according to embodiments of the disclosure;
FIG. 3 is a flowchart illustrating an implementation of a method for receiving a paging message at a side of a UE according to embodiments of the disclosure;
FIG. 4 is a diagram illustrating a structure of an AMF according to embodiments of the disclosure;
FIG. 5 is a diagram illustrating a structure of a base station according to embodiments of the disclosure; and
FIG. 6 is a diagram illustrating a structure of a UE according to embodiments of the disclosure.

## DETAILED DESCRIPTION

The inventor has noticed in the invention procedure as follows.

There is no solution that may select a suitable manner for paging a UE to inform the UE that an MBS session is about to start. At least one of following problems are existed.

According to the related art, for paging an idle UE, it is triggered by a core network and whether to use a group paging is also determined by an AMF. Therefore, it is a problem in the related art how to select a suitable AMF, how the AMF determines a group paging area, or how to page the UE under a case that there is a node not supporting multicast in the area.

In addition, when the UE receives a paging, a paging occasion (PO)/paging frame (PF) needs to be calculated in combination with a discontinuous reception (DRX) configuration of the UE. It is a problem to be solved how to calculate the PO or the PF under the group paging.

Meanwhile, in consideration of an energy saving requirement of the UE, it is an urgent problem to be solved how to reduce an extra power consumption caused by a false alarm to the UE, in which the false alarm to the UE is brought by the group paging.

On the basis of this, a solution for transmitting/receiving a paging message is provided according to embodiments of the disclosure. Implementations according to the disclosure will be described in combination with the accompanying drawings.

In descriptions, implementations at a side of an AMF, a side of a base station, and a side of a UE may be described in combination of examples of the implementations, to understand solution implementations according to embodiments of the disclosure better. The descriptions may not mean that implementations at the side of the AMF, the side of the base station, and the side of the UE must be performed with each other or separately. Actually, when implementations at the side of the AMF, the side of the base station, and the side of the UE are performed separately, the problems at the side of the AMF, the side of the base station, and the side of the UE may be solved by themselves, and when implementations at the side of the AMF, the side of the base station, and the side of the UE are performed with each other, a better technical effect may be obtained.

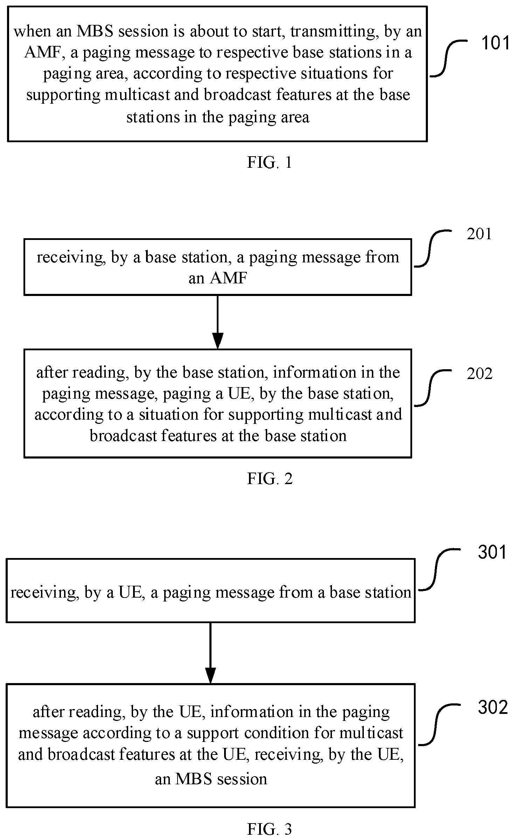

FIG. 1 is a flowchart illustrating an implementation of a method for transmitting a paging message at a side of an AMF. As illustrated in FIG. 1, the method includes following step.

At step 101, when an MBS session is about to start, the AMF transmits a paging message to respective base stations in a paging area, according to respective situations for supporting multicast and broadcast features at the base stations in the paging area.

FIG. 2 is a flowchart illustrating an implementation of a method for transmitting a paging message at a side of a base station. As illustrated in FIG. 2, the method includes following steps.

At step 201, the base station receives a paging message from an AMF.

At step 202, after the base station reads information in the paging message, the base station pages a UE according to a situation for supporting multicast and broadcast features at the base station.

FIG. 3 is a flowchart illustrating an implementation of a method for receiving a paging message at a side of a UE. As illustrated in FIG. 3, the method includes following steps.

At step 301, the UE receives a paging message from a base station.

At step 302, after the UE reads information in the paging message according to a situation for supporting multicast and broadcast features at the UE, the UE receives an MBS session.

According to an implementation, the AMF determines whether the base station supports the multicast and broadcast features when establishing a next generation (NG) interface between the base station and the AMF.

An implementation of a next generation Node B (gNB) of a 5th generation (5G) base station on establishing the NG interface/selecting the AMF is illustrated below.

When the NG interface is established between the gNB and the AMF, the gNB and the AMF may interact with each other about whether to support multicast and broadcast features. For a gNB supporting the multicast and broadcast, the AFM supporting the multicast and broadcast may be preferentially selected to establish the NG interface, to support the multicast and broadcast features.

According to an implementation, the tracking area (TA) configuration mode includes any one of:

all base stations in a TA, supporting the MBS session, or all base stations in a TA, not supporting the MBS session; or
a base station supporting the MBS session and a base station not supporting the MBS session being in the same TA.

The AMF may configure two types of TA configuration modes according to interacted information whether to support the multicast and broadcast at the gNB.

In a first mode, an existing TA configuration is adopted. Each TA may include a cell/gNB supporting the MBS session and a cell/gNB not supporting the MBS session. Identity may be added, to identify a cell not supporting the MBS session, or identify a cell supporting the MBS session, or identify both a cell not supporting the MBS session and a cell supporting the MBS session.

In a second mode, an MBS-dedicated TA configuration is adopted. In this configuration, two TA areas are included, one of which only includes a cell/gNB supporting the MBS session and the other of which only includes a cell/gNB not supporting the MBS session.

The following describes an implementation that the AMF triggers the paging to notify the UE of an upcoming session start.

According to an implementation, the AMF determines the paging area in any one or a combination of:

determining, by the AMF, a group paging area and an existing unicast paging area according to a TA list and multicast service group member information; or

determining, by the AMF, a group paging area and a unicast paging area according to a TA configuration mode.

In detail, the AMF determines an area that needs to transmit a group paging according to the TA list and multicast service group member information in the related art, for example, taking a union of TA lists of UEs.

That is, the group paging area obtained according to any one of the above different TA configuration modes may be: a group paging area where all cells support the MBS session, including an MBS-dedicated TA and a TA incidentally supporting an MBS session indication, in which the AMF issues the group paging to the gNB and this set of paging messages only includes MBS session information (such as a temporary mobile group identity (TMGI) and a multicast and broadcast address) that the session start is about to occur; and a group paging area where part of cells support the MBS session, that is, only part of TAs are the MBS-dedicated TA and the TA incidentally supporting the MBS session indication. Meanwhile, it may be obtained that a certain area is a non-group paging area, i.e. a common TA and a TA incidentally not supporting the MBS session indication.

For the non-group paging area, the AMF triggers a unicast paging, that is, a conventional paging message, that is, including UE identity (UE ID) information.

For the group paging area where all cells support the MBS session, that is, the area includes the MBS-dedicated TA and the TA incidentally supporting the MBS session indication, the AMF issues the group paging to the gNB, and this set of paging messages only includes MBS session information (such as the TMGI and the multicast and broadcast address) that the session start is about to occur; and meanwhile, it may also include UE ID information.

According to an implementation, the paging message is transmitted from the base station to the UE via a unicast paging message or a multicast-dedicated group paging message.

According to an implementation, the paging message is transmitted via the unicast paging message or a separate paging message.

According to an implementation, at the side of the AMF, transmitting the paging message to the respective base stations in the paging area according to the respective situations for supporting the multicast and broadcast features at the base stations in the paging area includes under a case that there is a base station supporting the multicast and broadcast features in the paging area.

In a manner A, a set of group paging messages including MBS session information that a session start is about to occur, and a set of paging messages including UE ID information may be transmitted.

In a manner B, a set of paging messages including MBS session information that a session start is about to occur, and UE ID information corresponding to the MBS session may be transmitted.

In a manner C, a group paging message including MBS session information that a session start is about to occur may be transmitted.

At the side of the base station, reading by the base station the information in the paging message according to the situation for supporting the multicast and broadcast features at the base station includes the following.

In a manner A, when a set of group paging messages including MBS session information that a session start is about to occur, and a set of paging messages including UE ID information are received: the base station supporting the multicast and broadcast features, selects the group paging message, and transmits the paging message including MBS session information at all POs, or the base station not supporting the multicast and broadcast features selects the paging message, and transmits the paging message only including UE ID information at a PO corresponding to the UE ID.

In a manner B, when receiving a set of paging messages including MBS session information that a session start is about to occur and UE ID information corresponding to the MBS session is received:

the base station supporting the multicast and broadcast features transmits the paging message including the MBS session information or including the MBS session information and carrying the UE ID information, at a PO corresponding to the UE ID information according to the UE ID information; or

the base station not supporting the multicast and broadcast features transmits the paging message only including the UE ID information at a PO corresponding to the UE ID information according to the UE ID information.

In a manner C, when a group paging message including MBS session information that a session start is about to occur is received:

the base station supporting the multicast and broadcast features transmits the paging message including the MBS session information at all POs, or according to member information obtained from a core network, transmits the paging message including the MBS session information or including the MBS session information and carrying UE ID information only at a PO corresponding to a member; or

after the base station not supporting the multicast and broadcast features requests UE ID information corresponding to the AMF, the base station not supporting the multicast and broadcast features transmits the paging message including a UE ID only at a PO corresponding to the UE ID.

The manner for acquiring the member information from the core network may be a join procedure based on a UE or a procedure the base station applies to the core network.

According to an implementation, the MBS session information includes any one or a combination of:

an MBS session ID, a TMGI, or a multicast IP address.

In detail, for the case that part of cells supports the MBS session, there are possible manners for transmitting the paging.

1) Group paging information is transmitted via an existing unicast paging message.

In a manner A, for all base stations/cells in the same group paging area, the AMF transmits two sets of paging messages, one of which only includes MBS session information (such as the TMG and the multicast and broadcast address) that the session start is about to occur, and the other of which is a conventional paging message, i.e. only includes UE ID information.

For base stations in the group paging area, a certain set of paging messages is selected by the base station to be transmitted at a radio access network (RAN) side according to whether the base stations may support multicast and broadcast features, that is, the base stations supporting the multicast and broadcast features select the group paging message, and all POs include MBS session information; and for base stations not supporting the multicast and broadcast features a legacy paging message is selected, that is, a corresponding PO includes the UE ID.

In a manner B, for all base stations/cells in the same group paging area, the AMF transmits the same set of paging messages which includes MBS session information (such as the TMGI and the multicast and broadcast address) that the session start is about to occur and UE ID information.

For base stations in the group paging area, a certain set of paging messages is selected to be transmitted at a RAN side according to whether the base stations may support the multicast and broadcast features, that is, the base stations supporting the multicast and broadcast features select the group paging message, and POs corresponding to IDs in the UE ID list include MBS session information; and for the base stations not supporting the multicast and broadcast features, the legacy paging message is selected, that is, the corresponding PO includes the UE ID.

In a manner C, for all base stations/cells in the same group paging area, the AMF only transmits the group paging message, that is, the message from the AMF only includes MBS session information (such as the TMGI and the multicast and broadcast address) that the session start is about to occur.

For the base stations supporting the multicast and broadcast features, the group paging message is selected, and MBS session information is included at all POs; and for the base station not supporting the multicast and broadcast features, interaction with the AMF is needed to request corresponding ID information, and the legacy paging message is transmitted at a corresponding PO, and the corresponding PO includes the UE ID.

Since the group paging message related to the MBS session is included in the legacy paging message, an extra power consumption may be brought for a UE not interested in an upcoming service and a UE not supporting or not subscribing to an MBS session, whether to include MBS session group paging information may be indicated via a short message, and specific service information or service group information may be possibly indicated. That is, according to an implementation, at the side of the base station, the method may further include: for the group paging message transmitted via the existing unicast message, indicating the UE whether the paging message includes the MBS session group paging information via the short message or whether the paging message is only the existing paging message. Correspondingly, at the side of the UE, whether the paging message includes the MBS session group paging information or whether the paging message only is the paging message is determined according to an indication of the short message.

In this case, after the UE supporting the MBS session receives the paging message at a corresponding PO, the UE further needs to read the MBS session information in addition to needing to read the UE ID list, and may not only read a part of the MBS session information and the UE ID list. That is, according to an implementation, the method may further include: when the UE supports the MBS session, after receiving the paging message at a PO corresponding to the MBS session, reading a UE ID list and MBS session information.

In detail, the base station selects and transmits corresponding content to the UE according to received information in combination with whether the base station itself supports the multicast and broadcast.

Since a same set of messages may be only transmitted to all base stations in one paging area, transmitting is performed according to the situation whether the base station supports the MBS session, not separately to a certain base station but also to nodes not supporting the MBS session in the area.

If all nodes in the paging area do not support the MBS session, the paging message may be only transmitted; only if there are one or more nodes supporting the MBS session in the paging area, a transmission may be performed according to one of the three manners.

2) The group paging message is a separate paging message.

Similar to the manner of the group paging message via the existing unicast paging message, the AMF may select a certain one of A, B and C to transmit the group paging message to all base stations in the paging area. The group paging message is transmitted at a group PO (G-PO)/group PF(G-PF) position for group paging. The group paging message may not include UE information, and only includes multicast service identity information that is about to start, such as an MBS session ID and a TMGI.

According to an implementation, the network may allocate additionally a radio network temporary identity (RNTI) for the MBS session group paging to the UE. According to an implementation, it is identified by a group paging RNTI (GP-RNTI) and allocated to the UE in a registration or join procedure of the UE.

When the UE is released to a non-connected state after joining, the UE retains a part of MBS session context, including but not limited to: a mapping between different MBS sessions and group-radio network temporary identities (G-RNTIs) (a mapping relationship between MBS sessions and G-RNTIs) and a GP-RNTI. That is, according to an implementation, the method may further include:

receiving, by the UE, a RNTI for an MBS session group paging message, allocated by a base station, in a registration or join procedure.

The method further includes: when the UE is released to a non-connected state after joining, retaining any one or a combination of a mapping relationship between different MBS sessions and G-RNTIs or a GP-RNTI.

An implementation of configuration and calculation of a G-PO/G-PF corresponding to group paging is described below.

According to an implementation, the method may further include:

configuring an MBS-dedicated DRX cycle via a system message.

In detail, the network configures an MBS-dedicated DRX cycle (the cycle may be same as a default unicast paging cycle in the cell) via the system message (for example, a system information bloc 1, SIB 1), and the network may configure more than one set of DRX configurations according to delay requirements of the service.

According to an implementation, at the side of the base station, the method may further include following manners.

In a first manner, the base station configures a fixed radio frame and subframe position for receiving the group paging message in the MBS-dedicated DRX cycle via a system message.

Or in a second manner, for multicast services configured with a same set of MBS-dedicated DRX cycle configurations, the base station disperses a time domain position at which an MBS session subscriber or interested user group needs to monitor paging, to different POs or PFs, according to service identity information of the MBS session.

Correspondingly, at the side of the UE, the method may further include following manners.

In a first manner, a fixed radio frame and subframe position for receiving a multicast-dedicated group paging message in an MBS-dedicated DRX cycle configured by the base station via a system message is received.

Or in a second manner, a same set of MBS-dedicated DRX cycle configurations configured by the base station for multicast services is received, and the UE monitors a group paging message when the UE wakes up at a PO or a PF corresponding to an MBS session the UE subscribes to, to confirm whether the MBS session is about to start.

In detail, for the PO/PF for receiving the paging message, there are two following manners.

In a first manner, the network configures a fixed radio frame and subframe position for receiving the group paging message in the cycle via a system message (such as a SIB 1).

In a second manner, for multicast services configured with the same set of DRXs, the multicast services are dispersed in different POs or PFs according to the service identity information, that is, UEs that subscribe to a certain multicast service monitors the group paging when waking up at POs/PFs corresponding to the service to confirm whether the service is about to start, which may be in detail as follow:

A G-PF(SFN) is calculated by:

$$(SFN + PF\_offset\_multicast) \bmod T' = (T' \operatorname{div} N) * (Multicast\_ID \bmod N),$$

where PF_offset_multicast is an offset of PF multicast, mod is a modulus calculation, div is a divergence, and Multicast ID is a multicast ID.

A G-PO (Index(i_s)) is calculated by:

$$i\_s = floor(Multicast\_ID/N) \bmod Ns,$$

where floor is a floor calculation. in which,

$$T' = \textbf{Multicast DRX cycle}$$

(configured by the network and related to a service delay requirement);

N: a number of total paging frames in one MBS session DRX cycle;
**Ns:** a number of G-POs in one G-PF;
**PF_offset_multicast:** an offset for determining a PF;
**Multicast_ID:** (TMGI, G-RNTI, MBS session ID, multicast IP address, or other fixed ID) **mod 1024**;
SFN is a system frame number.

In this case, a physical downlink control channel (PDCCH) for indicating the group paging may be scrambled by a paging-radio network temporary identity (P-RNTI) or a group-radio network temporary identity (G-RNTI)/GP-RNTI.

The following describes an implementation of conflict resolution between a G-PO and a legacy PO.

According to an implementation, at the side of the base station, the method may further include:

scrambling a group paging message via a G-RNTI or a GP-RNTI; or
scrambling a group paging message and a unicast paging message via a P-RNTI.
Correspondingly, at the side of the UE, the method may further include:

descrambling a group paging message via a G-RNTI or a GP-RNTI; or
descrambling a group paging message and a unicast paging message via a P-RNTI.

Inevitably, the G-PO position may collide with a legacy PO position in whole or in part, so that some UEs may not receive the multicast group paging and the unicast paging simultaneously, which may be solved by:

1) scrambling the group paging via the G-RNTI or the GP-RNTI, so that the UE may receive the group paging and the unicast paging simultaneously; and
2) scrambling the group paging and the unicast paging via a P-RNTI.

According to an implementation, at the side of the base station, when the group paging message and the unicast paging message are scrambled via the P-RNTI, the method further includes:

configuring a receiving offset of a group-paging occasion (G-PO) or a unicast PO;
adding the group paging message in the unicast paging message; or
configuring a UE energy saving mode.

Correspondingly, at the side of the UE, when the group paging message and the unicast paging message are descrambled via the P-RNTI, the method further includes:

receiving a receiving offset of a G-PO or a unicast PO;
receiving the unicast paging message added with the group paging message; or
receiving a UE energy saving mode configured by the base station.

A. The receiving offset of the G-PO or the existing unicast PO is configured.

The network may configure the receiving offset (or an offset window) of the G-PO or the unicast PO, that is, the network may retransmit the G-PO or the unicast PO at the offset (window) position.

The offset may be configured via a system message, for example, included in a G-PO in the SIB 1 or a legacy unicast paging configuration, or only a part of UEs are configured via a radio resource control (RRC) dedicated signaling, or both are used simultaneously. If there is an RRC configuration, it may be subject to the RRC configuration. When a collision occurs, the UE receives the group paging message or the unicast paging message at the offset (window) position according to the configuration. That is, according to an implementation, the receiving offset of the G-PO or the unicast PO is configured in any one or a combination of a system message or an RRC dedicated signaling.

B. The group paging message is added in the unicast paging message.

According to an implementation, at the side of the UE,
when the unicast paging message added with the group paging message is received, the method further includes:

when the UE supports the MBS session, reading an information element (IE) including an MBS session identity to confirm whether there is an MBS session that the UE is interested in/subscribes to, and reading and checking an IE including UE ID information in the paging message; or
when the UE does not support the MBS session, reading and checking an IE including UE ID information in the message to confirm whether to receive a paging message from a network.

In detail, the gNB will add the group paging message in the unicast paging. For a UE receiving the paging message, if the UE supports the MBS session, in addition to checking the UE list, an MBS session identity part will be read to determine whether there is the MBS session; and if the UE does not support the MBS session, the UE list is only checked to confirm whether to receive a conventional paging from the network.

C. A UE energy saving mode is configured.

According to an implementation, at the side of the UE, when receiving the UE energy saving mode configured by the base station, the method may further include:
when not receiving a message the base station itself supports the MBS session from the base station, receiving a unicast paging only when waking up at an existing PO or a PF of the unicast paging.

In detail, when the base station does not broadcast whether to support the MBS session, the UE does not wake up at the multicast-dedicated PO or PF to receive the multicast-dedicated group paging message, and only wakes up at the PO or PF of the unicast paging to receive the unicast paging.

Since the multicast-dedicated PO/PF may be configured to for a multicast group paging receiving only in a cell supporting the multicast, the cell may broadcast whether to support the multicast via the system message, and may in detail broadcast specific supported service information, etc. When the network does not broadcast the information, the UE defaults that the cell does not support the multicast. Therefore, the UE does not need to wake up at the dedicated PO/PF to receive the multicast, and only needs to wake up at the PO/PF of the unicast paging to receive the unicast paging.

Based on the same invention concept, an AMF, a base station, a UE and a computer storage medium are further provided according to embodiments of the disclosure. Since principles that problems solved by these devices are similar to problems solved in the method for transmitting the paging message and the method for receiving the paging message, implementations of these devices may refer to implementations of the methods, which are not repeated herein.

The technical solutions according to embodiments of the disclosure may be implemented in following manners.

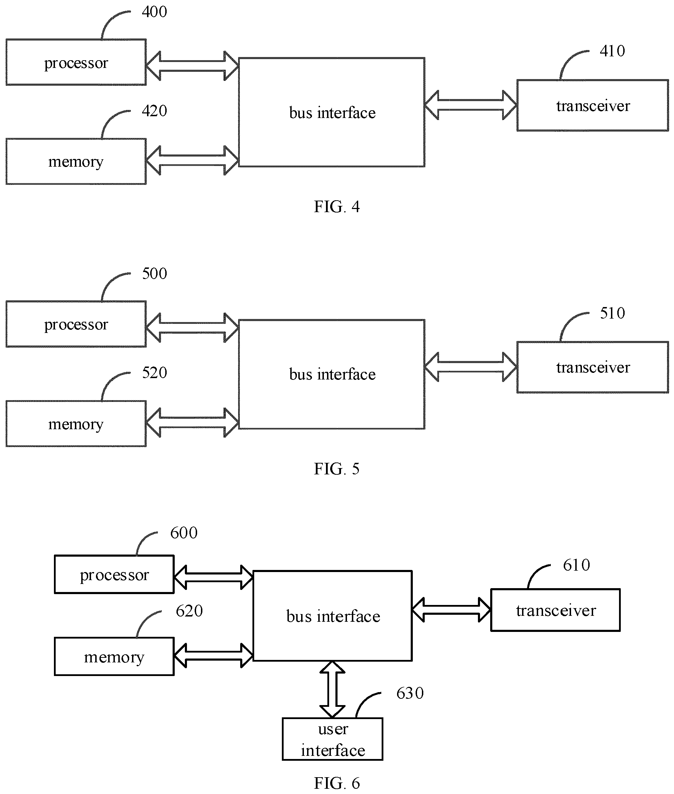

FIG. 4 is a diagram illustrating a structure of an AMF. As illustrated in FIG. 4, the AMF includes a processor 400 and a transceiver 410.

The processor 400 is configured to read a program stored 420 in a memory, to perform operations of:
when an MBS session is about to start, transmitting a paging message to respective base stations in a paging area, according to respective situations for supporting multicast and broadcast features at the base stations in the paging area.

The transceiver 410 is configured to transmit and receive data under a control of the processor 400.

According to an implementation, the AMF determines whether the base station supports the multicast and broadcast features when establishing an NG interface between the base station and the AMF.

According to an implementation, the paging area is determined in any one or a combination of:

determining a paging area according to a TA list and multicast service group member information; or
determining a unicast paging area according to a TA configuration mode.

According to an implementation, the TA configuration mode includes any one of:

all base stations in a TA, supporting the MBS session, or all base stations in a TA, not supporting the MBS session; or
a base station supporting the MBS session and a base station not supporting the MBS session being in a same TA.

According to an implementation, the paging message is transmitted from the base station to the UE via a unicast paging message or a multicast-dedicated group paging message.

According to an implementation, transmitting the paging message to the respective base stations in the paging area according to the respective situations for supporting the multicast and broadcast features at the base stations in the paging area includes under a case that there is a base station supporting the multicast and broadcast features in the paging area,

transmitting a set of group paging messages including MBS session information that a session start is about to occur, and a set of paging messages including UE ID information; or

transmitting a set of paging messages including MBS session information that a session start is about to occur, and UE ID information corresponding to the MBS session; or

transmitting a group paging message including MBS session information that a session start is about to occur.

According to an implementation, the MBS session information includes one or a combination of:

an MBS session ID, a TMGI, or a multicast IP address.

In FIG. 4, a bus architecture may include any number of interconnected buses and bridges, and in detail link various circuits such as one or more processors represented by the processor 400 and of memories represented by the memory 420. The bus architecture may further link various other circuits such as peripheral equipments, voltage regulators, and power management circuits, which are well known in the art and will not be further described herein. A bus interface provides an interface. The transceiver 410 may be a plurality of elements, i.e., a transmitter and a receiver, providing units for communicating with various other apparatuses on transmission media. The processor 400 is in charge of managing the bus architecture and general processing, and the memory 420 may store data used by the processor 400 in performing operations.

An AMF is further provided according to embodiments of the disclosure and includes an AMF paging module.

The AMF paging module is configured to, when an MBS session is about to start, transmit a paging message to respective base stations in a paging area, according to respective situations for supporting multicast and broadcast features at the base stations in the paging area.

According to an implementation, the AMF determining module is further configured to determine whether the base station supports the multicast and broadcast features when establishing an NG interface between the base station and the AMF.

According to an implementation, the AMF paging module is further configured to determine the paging area in any one or a combination of:

determining, by the AMF, a group paging area and a unicast paging area according to a TA list and multicast service group member information; or

determining, by the AMF, a group paging area and a unicast paging area according to a TA configuration mode.

According to an implementation, the AMF paging module is further configured to, based on the TA configuration mode, include any one of:

all base stations in a TA, supporting the MBS session, or all base stations in a TA, not supporting the MBS session; or

a base station supporting the MBS session and a base station not supporting the MBS session being in a same TA.

According to an implementation, the AMF paging module is further configured to transmit the paging message from the base station to the UE via a unicast paging message or a multicast-dedicated group paging message.

According to an implementation, the AMF paging module is further configured to transmit the paging message to the respective base stations in the paging area according to the respective situations for supporting the multicast and broadcast features at the base stations in the paging area, by performing: under a case that there is a base station supporting the multicast and broadcast features in the paging area,

transmitting a set of group paging messages including MBS session information that a session start is about to occur, and a set of paging messages including UE ID information; or

transmitting a set of paging messages including MBS session information that a session start is about to occur, and UE ID information corresponding to the MBS session; or

transmitting a group paging message including MBS session information that a session start is about to occur.

According to an implementation, the AMF paging module is further configured to transmit MBS session information including any one or a combination of:

an MBS session ID, a TMGI, or a multicast IP address.

For ease of descriptions, components of the apparatus are respectively described by dividing into various modules or units in terms of function. Of course, when the disclosure is implemented, functions of various modules or units may be implemented in the same or multiple software or hardware.

FIG. 5 is a diagram illustrating a structure of a base station. As illustrated in FIG. 5, the base station includes a processor 500 and a transceiver 510.

The processor 500 is configured to read a program stored 520 in a memory, to perform operations of:

receiving a paging message from an AMF; and
after reading information in the paging message, paging a UE according to a support situation for multicast and broadcast features at the base station; and

The transceiver 510 is configured to transmit and receive data under a control of the processor 500.

According to an implementation, reading the information in the paging message according to the support situation for the multicast and broadcast features at the base station includes:

in response to receiving a set of group paging messages including MBS session information that a session start is about to occur, and a set of paging messages including UE ID information,
selecting, by the base station supporting the multicast and broadcast features, the group paging message, and transmitting the paging message including MBS session information at all paging POs, or selecting, by the base station not supporting the multicast and broadcast features, the paging message, and transmitting the paging message only including UE ID information at a PO corresponding to the UE ID;
or
in response to receiving a set of paging messages including MBS session information that a session start is about to occur and UE ID information corresponding to the MBS session,
transmitting, by the base station supporting the multicast and broadcast features, the paging message including the MBS session information or including the MBS session information and carrying the UE ID information, at a PO corresponding to the UE ID information according to the UE ID information; or
transmitting, by the base station not supporting the multicast and broadcast features, the paging message only including the UE ID information at a PO corresponding to the UE ID information according to the UE ID information; or,
in response to receiving a group paging message including MBS session information that a session start is about to occur,
transmitting, by the base station supporting the multicast and broadcast features, the paging message including the MBS session information at all POs, or according to group member information obtained from a core network, transmitting the paging message including the MBS session information or including the MBS session information and carrying the UE ID information at a PO corresponding to a member only; or
after the base station not supporting the multicast and broadcast features requests corresponding UE ID information from the AMF, transmitting the paging message including a UE ID at a PO corresponding to the UE ID only.

According to an implementation, the base station further:
configures an MBS-dedicated DRX cycle via a system message.

According to an implementation, the paging message is transmitted from the base station to the UE via a unicast paging message or a multicast-dedicated group paging message.

According to an implementation, the PO at which the base station transmits the group paging message includes:

in response to transmitting via the unicast paging message, the PO being a PO obtained according to a UE ID; or
in response to transmitting via the MBS-dedicated group paging message, the PO being a PO obtained according to MBS session information.

According to an implementation, the base station further:
for the group paging message transmitted via the unicast paging message, indicates whether to include MBS session group paging information or whether to include a type of MBS session group paging information via a short message.

According to an implementation, the base station further:

configures a fixed radio frame and subframe position for receiving the group paging message in the MBS-dedicated DRX cycle via a system message; or
for multicast services configured with a same set of MBS-dedicated DRX cycle configurations, disperses a time domain position at which an MBS session subscriber or interested user group needs to monitor paging, to different POs or PFs, according to service identity information of the MBS session.

According to an implementation, the base station further:

scrambles the group paging message via a G-RNTI or a GP-RNTI; or
scrambles the group paging message and the unicast paging message via a P-RNTI.

According to an implementation, when scrambling the group paging message and the unicast paging message via the P-RNTI, the base station further:

configures a receiving offset of a G-PO or a unicast PO;
add the group paging message in the unicast paging message; or
configuring a UE energy saving mode.

According to an implementation, when the receiving offset of the G-PO or the unicast PO is configured in any one or a combination of:

a system message or an RRC dedicated signaling.

In FIG. 5, a bus architecture may include any number of interconnected buses and bridges, and in detail link various circuits such as one or more processors represented by the processor 500 and memories represented by the memory 520. The bus architecture may further link various other circuits such as peripheral equipments, voltage regulators, and power management circuits, which are well known in the art and will not be further described herein. A bus interface provides an interface. The transceiver 510 may be a plurality of elements, i.e., a transmitter and a receiver, for providing units for communicating with various other apparatuses on transmission media. The processor 500 is in charge of managing the bus architecture and general processing, and the memory 520 may store data used by the processor 500 in performing operations.

A base station is further provided according to embodiments of the disclosure, and includes a base station receiving module and a base station paging module.

The base station receiving module is configured to receive a paging message from an AMF.

The base station paging module is configured to, after reading information in the paging message, page a UE according to a situation for supporting multicast and broadcast features at the base station.

According to an implementation, the base station paging module is further configured to read the information in the paging message according to the situation for supporting the multicast and broadcast features at the base station, by performing:

in response to receiving a set of group paging messages including MBS session information that a session start is about to occur, and a set of paging messages including UE ID information,
selecting, by the base station supporting the multicast and broadcast features, the group paging message, and transmitting the paging message including the MBS session information at all POs, or selecting, by the base station not supporting the multicast and broadcast features, the paging message, and transmitting the paging message only including UE ID information at a PO corresponding to the UE ID;
or,
in response to receiving a set of paging messages including MBS session information that a session start is about to occur and UE ID information corresponding to the MBS session,
transmitting, by the base station supporting the multicast and broadcast features, the paging message including the MBS session information or including the MBS session information and carrying the UE ID information, at a PO corresponding to the UE ID information according to the UE ID information; or
transmitting, by the base station not supporting the multicast and broadcast features, the paging message only including the UE ID information at a PO corresponding to the UE ID information according to the UE ID information; or
in response to receiving a group paging message including MBS session information that a session start is about to occur,
transmitting, by the base station supporting the multicast and broadcast features, the paging message including the MBS session information at all POs, or according to group member information obtained from a core network, transmitting the paging message including the MBS session information or including the MBS session information and carrying UE ID information only at a PO corresponding to a member; or
after the base station not supporting the multicast and broadcast features requests UE ID information corresponding to the AMF, transmitting the paging message including a UE ID only at a PO corresponding to the UE ID.

According to an implementation, the base station paging module is further configured to configure an MBS-dedicated DRX cycle via a system message.

According to an implementation, the base station paging module is further configured to transmit the paging message from the base station to the UE via a unicast paging message or a multicast-dedicated group paging message.

According to an implementation, the base station paging module is further configured to transmit the paging message at the PO. In response to transmitting via the unicast paging message, the PO is a PO obtained according to a UE ID; or in response to transmitting via the MBS-dedicated group paging message, the PO is a PO obtained according to MBS session information.

According to an implementation, the base station paging module is further configured to, for the group paging message transmitted via the unicast paging message, indicates whether to include MBS session group paging information or whether to include a type of MBS session group paging information via a short message.

According to an implementation, the base station paging module is further configured to, configure a fixed radio frame and subframe position for receiving the group paging message in the MBS-dedicated DRX cycle via a system message; or for multicast services configured with a same set of MBS-dedicated DRX cycle configurations, disperse a time domain position at which an MBS session subscriber or interested user group needs to monitor paging, to different POs or PFs, according to service identity information of the MBS session.

According to an implementation, the base station paging module is further configured to, scramble the group paging message via a G-RNTI or a GP-RNTI; or scramble the group paging message and the unicast paging message via a P-RNTI.

According to an implementation, the base station paging module is further configured to, when scrambling the group paging message and the unicast paging message via the P-RNTI, configure a receiving offset of a G-PO or a unicast PO; add the group paging message in the unicast paging message; and configure a UE energy saving mode.

According to an implementation, the base station paging module is further configured to, when configuring the receiving offset of the G-PO or the unicast PO, configure by any one or a combination of:

a system message or an RRC dedicated signaling.

For ease of descriptions, components of the apparatus are respectively described by dividing into various modules or units in terms of function. Of course, when the disclosure is implemented, functions of various modules or units may be implemented in the same or multiple software or hardware.

FIG. 6 is a diagram illustrating a structure of a UE. As illustrated in FIG. 6, the UE includes a processor 600 and a transceiver 610.

The processor 600 is configured to read a program stored 620 in a memory, to perform operations of:

receiving a paging message from a base station; and
after reading information in the paging message according to a situation for supporting multicast and broadcast features at the UE, receiving an MBS session.

The transceiver 610 is configured to transmit and receive data under a control of the processor 600.

According to an implementation, the UE further:
receives an RNTI for an MBS session group paging message, allocated by a base station in a registration or join procedure.

According to an implementation, the UE further:
when the UE is released to a non-connected state after joining, retains any one or a combination of MIBS session context:
a mapping relationship between different MBS sessions and G-RNTIs, or a GP-RNTI.

According to an implementation, the UE further:
when the UE supports the MBS session, after receiving the paging message at a PO corresponding to the MBS session, reads a UE ID list and MBS session information.

According to an implementation, the UE further:
determines whether the paging message includes MBS session group paging information or only is a paging message according to an indication of a short message.

According to an implementation, the UE further:

descrambles a group paging message via a G-RNTI or a GP-RNTI; or
descrambles a group paging message and a unicast paging message via a P-RNTI.

According to an implementation, when descrambling the group paging message and the unicast paging message via the P-RNTI, the UE further:

receives a receiving offset of a G-PO or a unicast PO, configured by the base station;
receives the unicast paging message added with the group paging message; or
receives a UE energy saving mode configured by the base station.

According to an implementation, receives the receiving offset of the G-PO or the PO configured by the base station, by any one or a combination of:
a system message or an RRC dedicated signaling.

According to an implementation, when receiving the unicast paging message adding the group paging message, the UE further:

when the UE supports the MBS session, reads an IE including an MBS session identity to confirm whether there is an MBS session that the UE is interested in/subscribes to, and reads and checks an IE including UE ID information in the paging message; or

when the UE does not support the MBS session, reads and checks an IE including UE ID information in the message to confirm whether to receive a paging message from a network.

According to an implementation, when receiving the UE energy saving mode configured by the base station, the UE further:

when not receiving a message whether the base station itself supports the MBS session from the base station, receives a unicast paging only when waking up at a PO or a PF of the unicast paging.

According to an implementation, the UE further:

receives a fixed radio frame and subframe position for receiving a multicast-dedicated group paging message in an MBS-dedicated DRX cycle, configured by the base station via a system message; or

receives a same set of MBS-dedicated DRX cycle configurations configured by the base station for a plurality of multicast services, and monitoring a group paging message when the UE wakes up at a PO or a PF corresponding to an MBS session the UE subscribes to, to confirm whether the MBS session is about to start.

In FIG. 6, a bus architecture may include any number of interconnected buses and bridges, and in detail link various circuits such as one or more processors represented by the processor 600 and of memories represented by the memory 620. The bus architecture may further link various other circuits such as peripheral equipments, voltage regulators, and power management circuits, which are well known in the art and will not be further described herein. A bus interface provides an interface. The transceiver 610 may be elements, i.e., include a transmitter and a receiver, and provides units for communicating with various other apparatuses on transmission media. For different user devices, the user interface 630 may be further an interface capable of externally and internally connecting required devices. The connected devices include, but are not limited to, keyboards, monitors, speakers, microphones, joysticks, etc.

The processor 600 is in charge of managing the bus architecture and general processing, and the memory 620 may store data used by the processor 600 in performing operations.

A UE is further provided according to embodiments of the disclosure, and includes a UE paging module and a UE receiving module.

The UE paging module is configured to receive a paging message from a base station.

The UE receiving module is configured to receive an MBS session after reading information in the paging message according to a situation for supporting multicast and broadcast features at the UE.

According to an implementation, the UE receiving module is further configured to, receive an RNTI for an MBS session group paging message, allocated by a base station in a registration or join procedure.

According to an implementation, the UE receiving module is further configured to, when the UE is released to a non-connected state after joining, retain any one or a combination of MBS session context: a mapping relationship between different MBS sessions and G-RNTIs, or a GP-RNTI.

According to an implementation, the UE receiving module is further configured to, when the UE supports the MBS session, after receiving the paging message at a PO corresponding to the MBS session, read a UE ID list and MBS session information.

According to an implementation, the UE receiving module is further configured to determine whether the paging message includes MBS session group paging information or only is a paging message according to an indication of a short message.

According to an implementation, the UE receiving module is further configured to, descramble a group paging message via a G-RNTI or a GP-RNTI; or descramble a group paging message and a unicast paging message via a P-RNTI.

According to an implementation, the UE receiving module is further configured to, when descrambling the group paging message and the unicast paging message via the P-RNTI, receive a receiving offset of a G-PO or a unicast PO, configured by the base station; receive the unicast paging message added with the group paging message; or receive a UE energy saving mode configured by the base station.

According to an implementation, the UE receiving module is further configured to, receive the receiving offset of the G-PO or the unicast PO configured by the base station, by any one or a combination of:

a system message or an RRC dedicated signaling.

According to an implementation, the UE receiving module is further configured to, when receiving the unicast PO added with the group paging message, when the UE supports the MBS session, read an IE including an MBS session identity to confirm whether there is an MBS session that the UE is interested in/subscribes to, and read and check an IE including UE ID information in the paging message; or when the UE does not support the MBS session, read and check an IE including UE ID information in the message to confirm whether to receive a paging message from a network.

According to an implementation, the UE receiving module is further configured to, when receiving the UE energy saving mode configured by the base station, and when not receiving a message whether the base station itself supports the MBS session from the base station, receive a unicast paging only when the UE wakes up at a PO or a PF of the unicast paging.

According to an implementation, the UE receiving module is further configured to receive a fixed radio frame and subframe position for receiving a multicast-dedicated group paging message in an MBS-dedicated DRX cycle, configured by the base station via a system message; or

receive a same set of MBS-dedicated DRX cycle configurations configured by the base station for a plurality of multicast services, and listen to a group paging message when the UE wakes up at a PO or a PF corresponding to an MBS session the UE subscribes to, to confirm whether the MBS session is about to start.

A computer-readable storage medium is provided. The computer-readable storage medium stores a computer program for implementing the method for transmitting the paging message at the side of the AMF, the method for transmitting the paging message at the side of the base station, or the method for receiving the paging message at the side of the UE.

For ease of descriptions, components of the apparatus are respectively described by dividing into various modules or units in terms of function. Of course, when the disclosure is implemented, functions of various modules or units may be implemented in the same or multiple software or hardware.

A computer-readable storage medium is provided according to embodiments of the disclosure. The computer-readable storage medium stores a computer program for implementing the method for transmitting the paging message at the side of the AMF, the method for transmitting the paging message at the side of the base station, or the method for receiving the paging message at the side of the UE.

The implementations may refer to the method for transmitting the paging message at the side of the AMF, the method for transmitting the paging message at the side of the base station, or the method for receiving the paging message at the side of the UE.

In summary, in the technical solutions provided according to embodiments of the disclosure, the AMF transmits the paging message to the base station as follows.

The AMF transmits two sets of paging messages, one of which only includes MBS session information (such as the TMGI and the multicast and broadcast address) that the session start is about to occur, and the other of which is a conventional paging message, i.e. only includes UE ID information.

The AMF transmits the same set of paging messages which includes MBS session information (such as the TMGI and the multicast and broadcast address) that the session start is about to occur and UE ID information.

The AMF only transmits the group paging message, that is, the message from the AMF only includes MBS session information (such as the TMGI and the multicast and broadcast address) that the session start is about to occur.

An MBS-dedicated paging configuration and a G-PO/PF calculation solution are further provided.

A solution that an MBS session group paging is scrambled by a dedicated RNTI or a G-RNTI is further provided.

An MBS session context is further retained when the UE enters an idle/inactive state after joining, including but not limited to: mapping between different MBS sessions and G-RNTIs (a mapping relationship between MBS sessions and G-RNTIs) or a GP-RNTI.

Whether to support the MBS session when the NG interface is established is considered.

The MBS session is considered for a TA configuration.

A G-PO/unicast PO offset (window) configuration solution is further provided.

A solution that the network broadcasts whether to support the multicast and may broadcast a specific supported service is further provided.

Based on the above solutions, it may be ensured to select a suitable manner at different base stations to page the UEs to inform that the MBS session is about to start, and the influence on the UE is reduced as much as possible.

Those skilled in the art shall understand that embodiments in the disclosure may be provided as methods, systems, or computer program products. Therefore, the disclosure may adopt a form of full hardware embodiments, full software embodiments, or embodiments combining software and hardware. Further, the disclosure may adopt a form of a computer program product implemented on one or more computer usable storage media (including but not limited to a disk memory and an optical memory) including a computer usable program code.

The disclosure is described with reference to flowcharts and/or block diagrams of methods, devices (systems), and computer program products according to embodiments of the disclosure. It should be understood that each process and/or block in the flowchart and/or the block diagram, and a combination of the process and/or the block in the flowchart and/or the block diagram, may be implemented by computer program instructions. The computer program instructions may be provided to a processor of a general-purpose computer, a dedicated computer, an embedded processor, or other programmable data processing devices to produce a machine such that instructions executed by the processor of the computer or other programmable data processing devices may produce an apparatus for implementing functions specified in one or more processes of the flowchart and/or in one or more blocks of the block diagram.

The computer program instructions may also be stored in a computer-readable memory capable of guiding the computer or the other programmable data processing devices to operate in a particular manner such that the instructions stored in the computer-readable memory produce an article of manufacture including an instruction apparatus that implements the function specified in one or more processes of the flowchart and/or in one or more blocks of the block diagram.

The computer program instructions may be loaded onto a computer or other programmable data processing devices such that a series of operation steps are performed on the computer or the other programmable devices to produce the processing implemented by the computer such that the instructions executed on the computer or the other programmable devices provide steps of functions specified in one or more processes of the flowchart and/or in one or more blocks of the block diagram.

It may be understood that functions described according to embodiments of the disclosure may be implemented with hardware, software, a firmware, and combination thereof. For a hardware implementation, modules, units, sub-modules, subunits, etc., may be implemented in one or more application specific integrated circuits (ASICs), digital signal processors (DSPs), digital signal processing devices (DSPDs), programmable logic devices (PLDs), field-programmable gate arrays (FPGAs), general-purpose processors, controllers, microcontrollers, microprocessors, other electronic units for performing functions of the disclosure, or a combination thereof.

Obviously, those skilled in the art may make various modifications and variations to the disclosure without deviating from the spirit and scope of the disclosure. Thus, if these modifications and variations of the disclosure fall within the scope of claims of the disclosure and their equivalents, the disclosure present also intended to include such modifications and variations.

**Claims**

1. A method for transmitting a paging message, comprising:
   when a multicast and broadcast service (MBS) session is about to start, transmitting, by an access and mobility management function (AMF), a paging message to respective base stations in a paging area, according to respective situations for supporting multicast and broadcast features at the base stations in the paging area.

2. The method according to claim 1, wherein the AMF determines whether the base station supports the multicast and broadcast features when establishing a next generation (NG) interface between the base station and the AMF.

3. The method according to claim 1, wherein the AMF determines the paging area in any one or a combination of:

   determining, by the AMF, a group paging area and a unicast paging area according to a tracking area (TA) list and multicast service group member information; or
   determining, by the AMF, a group paging area and a unicast paging area according to a TA configuration mode.

4. The method according to claim 3, wherein the TA configuration mode comprises any one of:

   all base stations in a TA, supporting the MBS session, or all base stations in a TA, not supporting the MBS session; or
   a base station supporting the MBS session and a base station not supporting the MBS session being in a same TA.

5. The method according to claim 1, wherein the paging message is transmitted from the base station to a user equipment (UE) via a unicast paging message or a multicast-dedicated group paging message.

6. The method according to claim 5, wherein transmitting the paging message to the respective base stations in the paging area according to the respective situations for supporting the multicast and broadcast features at the base stations in the paging area comprises under a case that there is a base station supporting the multicast and broadcast features in the paging area,

   transmitting a set of group paging messages comprising MBS session information that a session start is about to occur, and a set of paging messages comprising UE identity (UE ID) information; or
   transmitting a set of paging messages comprising MBS session information that a session start is about to occur and UE ID information corresponding to the MBS session; or
   transmitting a group paging message comprising MBS session information that a session start is about to occur.

7. The method according to claim 6, wherein the MBS session information comprises any one or a combination of: an MBS session ID, a temporary mobile group identity (TMGI), or a multicast IP address.

8. A method for transmitting a paging message, comprising:

receiving, by a base station, a paging message from an access and mobility management function (AMF); and after reading, by the base station, information in the paging message, paging a user equipment (UE), by the base station, according to a situation for supporting multicast and broadcast features at the base station.

9. The method according to claim 8, wherein reading by the base station the information in the paging message according to the situation for supporting the multicast and broadcast features at the base station comprises:

in response to receiving a set of group paging messages comprising multicast and broadcast service (MBS) session information that a session start is about to occur, and a set of paging messages comprising UE identity (UE ID) information, selecting, by the base station supporting the multicast and broadcast features, the group paging message, and transmitting the paging message comprising the MBS session information at all paging occasions (POs), or selecting, by the base station not supporting the multicast and broadcast features, the paging message, and transmitting the paging message only comprising the UE ID information at a PO corresponding to the UE ID; or
in response to receiving a set of paging messages comprising MBS session information that a session start is about to occur and UE ID information corresponding to the MBS session, transmitting, by the base station supporting the multicast and broadcast features, the paging message comprising the MBS session information or comprising the MBS session information and carrying the UE ID information, at a PO corresponding to the UE ID information, according to the UE ID information; or transmitting, by the base station not supporting the multicast and broadcast features, the paging message only comprising the UE ID information at a PO corresponding to the UE ID information, according to the UE ID information; or
in response to receiving a group paging message comprising MBS session information that a session start is about to occur, transmitting, by the base station supporting the multicast and broadcast features, the paging message comprising the MBS session information at all POs, or according to group member information obtained from a core network, transmitting the paging message comprising the MBS session information or comprising the MBS session information and carrying the UE ID information at a PO corresponding to a member only; or after the base station not supporting the multicast and broadcast features requests corresponding UE ID information from the AMF, transmitting the paging message comprising a UE identity (UE_ID) at a PO corresponding to the UE ID only.

10. The method according to claim 8, further comprising:
configuring, by the base station, an MBS-dedicated discontinuous reception (DRX) cycle via a system message.

11. The method according to claim 8, wherein the paging message is transmitted from the base station to the UE via a unicast paging message or a multicast-dedicated group paging message.

12. The method according to claim 11, wherein the PO at which the base station transmits the group paging message comprises:

in response to transmitting via the unicast paging message, the PO being a PO obtained according to a UE identity (UE ID); or
in response to transmitting via the MBS-dedicated group paging message, the PO being a PO obtained according to MBS session information.

13. The method according to claim 11, further comprising:
for the group paging message transmitted via the unicast paging message, indicating whether to comprise MBS session group paging information or whether to comprise a type of MBS session group paging information via a short message.

**14.** The method according to claim 11, further comprising:

configuring, by the base station, a fixed radio frame and subframe position for receiving the group paging message, in the MBS-dedicated DRX cycle, via a system message; or

for multicast services configured with a same set of MBS-dedicated DRX cycle configurations, dispersing, by the base station, a time domain position at which an MBS session subscriber or interested user group needs to monitor paging, to different paging occasions (POs) or paging frames (PFs), according to service identity information of the MBS session.

**15.** The method according to claim 11, further comprising:

scrambling the group paging message via a group-radio network temporary identity (G-RNTI) or a group paging-radio network temporary identity (GP-RNTI); or

scrambling the group paging message and the unicast paging message via a paging-radio network temporary identity (P-RNTI).

**16.** The method according to claim 15, wherein when scrambling the group paging message and the unicast paging message via the P-RNTI, the method further comprises:

configuring a receiving offset of a group-paging occasion (G-PO) or a unicast paging occasion (PO);

adding the group paging message in the unicast paging message; or

configuring a UE energy saving mode.

**17.** A method for receiving a paging message, comprising:

receiving, by a user equipment (UE), a paging message from a base station; and

after reading, by the UE, information in the paging message according to a situation for supporting multicast and broadcast features at the UE, receiving, by the UE, a multicast and broadcast service (MBS) session.

**18.** The method according to claim 17, further comprising:
receiving, by the UE, a radio network temporary identity (RNTI) for an MBS session group paging message, allocated by a base station, in a registration or join procedure.

**19.** The method according to claim 18, further comprising:
when the UE is released to a non-connected state after joining, retaining any one or a combination of MBS session context: a mapping relationship between different MBS sessions and G-RNTIs, or a GP-RNTI.

**20.** The method according to claim 18, further comprising:
when the UE supports the MBS session, after receiving the paging message at a paging occasion (PO) corresponding to the MBS session, reading a UE identity (UE ID) list and MBS session information.

**21.** The method according to claim 17, further comprising:
determining whether the paging message comprises MBS session group paging information or only is a paging message according to an indication of a short message.

**22.** The method according to claim 17, further comprising:

descrambling a group paging message via a group-radio network temporary identity (G-RNTI) or a group paging-radio network temporary identity (GP-RNTI); or,

descrambling a group paging message and a unicast paging message via a paging-radio network temporary identity (P-RNTI).

**23.** The method according to claim 22, wherein when descrambling the group paging message and the unicast paging message via the P-RNTI, the method further comprises:

receiving a receiving offset of a group-paging occasion (G-PO) or a unicast paging occasion (PO), configured by the base station;

receiving the unicast paging message added with the group paging message; or

receiving a UE energy saving mode configured by the base station.

24. The method according to claim 23, wherein when receiving the unicast paging message added with the group paging message, the method further comprises:

when the UE supports the MBS session, reading an information element (IE) comprising an MBS session identity to confirm whether there is an MBS session that the UE is interested in/subscribes to, and reading and checking an IE comprising UE ID information in the paging message; or
when the UE does not support the MBS session, reading and checking an IE comprising UE ID information in the paging message to confirm whether to receive a paging message from a network.

25. The method according to claim 23, wherein when receiving the UE energy saving mode configured by the base station, the method further comprises:
when not receiving a message whether the base station itself supports the MBS session from the base station, receiving a unicast paging only when the UE wakes up at a paging occasion (PO) or a paging frame (PF) of the unicast paging.

26. The method according to claim 17, further comprising:

receiving a fixed radio frame and subframe position for receiving a multicast-dedicated group paging message in an MBS-dedicated discontinuous reception (DRX) cycle, configured by the base station via a system message; or
receiving a same set of MBS-dedicated DRX cycle configurations configured by the base station for multicast services, and monitoring a group paging message when the UE wakes up at a paging occasion (PO) or a paging frame (PF) corresponding to an MBS session the UE subscribes to, to confirm whether the MBS session is about to start.

27. An access and mobility management function (AMF), comprising:
a processor, configured to read a program stored in a memory, to perform operations of:

when a multicast and broadcast service (MBS) session is about to start, transmitting a paging message to respective base stations in a paging area, according to respective situations for supporting multicast and broadcast features at the base stations in the paging area;
a transceiver, configured to receive and transmit data under a control of the processor.

28. An access and mobility management function (AMF), comprising:
an AMF paging module, configured to, when a multicast and broadcast service (MBS) session is about to start, transmit a paging message to respective base stations in a paging area, according to respective situations for supporting multicast and broadcast features at the base stations in the paging area.

29. A base station, comprising:

a processor, configured to read a program stored in a memory, to perform operations of receiving a paging message from an access and mobility management function (AMF); and
after reading information in the paging message, paging a user equipment (UE) according to a situation for supporting multicast and broadcast features at the base station; and
a transceiver, configured to receive and transmit data under a control of the processor.

30. A base station, comprising:

a base station receiving module, configured to receive a paging message from an access and mobility management function (AMF); and
a base station paging module, configured to, after reading information in the paging message, page a user equipment (UE) according to a situation for supporting multicast and broadcast features at the base station.

31. A user equipment (UE), comprising:
a processor, configured to read a program stored in a memory, to perform operations of:

receiving a paging message from a base station; and

after reading information in the paging message according to a situation for supporting multicast and broadcast features at the UE, receiving a multicast and broadcast service (MBS) session; and

a transceiver, configured to receive and transmit data under a control of the processor.

32. A user equipment (UE), comprising:

a UE paging module, configured to receive a paging message from a base station; and

a UE receiving module, configured to, after reading information in the paging message according to a situation for supporting multicast and broadcast features at the UE, receive a multicast and broadcast service (MBS) session.

33. A computer-readable storage medium, wherein the computer-readable storage medium stores a computer program for performing the method according to any one of claims 1 to 26.

when an MBS session is about to start, transmitting, by an AMF, a paging message to respective base stations in a paging area, according to respective situations for supporting multicast and broadcast features at the base stations in the paging area

101

FIG. 1

receiving, by a base station, a paging message from an AMF

201

after reading, by the base station, information in the paging message, paging a UE, by the base station, according to a situation for supporting multicast and broadcast features at the base station

202

FIG. 2

receiving, by a UE, a paging message from a base station

301

after reading, by the UE, information in the paging message according to a support condition for multicast and broadcast features at the UE, receiving, by the UE, an MBS session

302

FIG. 3

FIG. 4

FIG. 5

FIG. 6

## INTERNATIONAL SEARCH REPORT

| International application No. |
|---|
| **PCT/CN2022/112117** |

**A. CLASSIFICATION OF SUBJECT MATTER**

H04W 4/06(2009.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: legacy, 广播, session, unicast, notification, 多播, AMF, gNB, group, MBS, MBMS, support+, individual, idle, 组播, start, paging, 寻呼, NG, 支持, RAN, PO, PF, short message, join, UE ID, 寻呼区, 跟踪区, TA, RNTI

**C. DOCUMENTS CONSIDERED TO BE RELEVANT**

| Category* | Citation of document, with indication, where appropriate, of the relevant passages | Relevant to claim No. |
|---|---|---|
| X | OPPO. "Group notification and unicast paging for MBS activation" *R2-2104940, 3GPP TSG-RAN WG2 Meeting #114 electronic,* 27 May 2021 (2021-05-27), pages 1-4, sections 1-2 | 1-33 |
| A | CMCC. "Discussion MBS notification schemes" *R2-2108523, 3GPP TSG-RAN WG2 Meeting #115 electronic,* 06 August 2021 (2021-08-06), entire document | 1-33 |
| A | INTEL CORP. "Group notification and RACH congestion" *R2-2104875, 3GPP TSG-RAN WG2 Meeting #114-e,* 27 May 2021 (2021-05-27), entire document | 1-33 |
| A | WO 2021091307 A1 (SAMSUNG ELECTRONICS CO., LTD.) 14 May 2021 (2021-05-14) entire document | 1-33 |
| A | US 2020092923 A1 (QUALCOMM INC.) 19 March 2020 (2020-03-19) entire document | 1-33 |
| A | CN 113225695 A (DATANG MOBILE COMMUNICATIONS EQUIPMENT CO., LTD.) 06 August 2021 (2021-08-06) entire document | 1-33 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **31 October 2022** | **10 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/112117**

| Patent document cited in search report | | | Publication date (day/month/year) | Patent family member(s) | | | Publication date (day/month/year) |
|---|---|---|---|---|---|---|---|
| WO | 2021091307 | A1 | 14 May 2021 | KR | 20210055546 | A | 17 May 2021 |
| US | 2020092923 | A1 | 19 March 2020 | WO | 2020061347 | A1 | 26 March 2020 |
| | | | | EP | 3854170 | A1 | 28 July 2021 |
| | | | | CN | 112740820 | A | 30 April 2021 |
| CN | 113225695 | A | 06 August 2021 | WO | 2021147542 | A1 | 29 July 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110930512